# EUROPEAN PATENT APPLICATION

(11) **EP 3 118 069 A1**
(43) Date of publication of application: **18.01.2017**
(21) Application number: 16155654.3
(22) Date of filing: 15.02.2016
(51) Int. Cl.: B60R 25/0215

(54) **ELECTRICAL STEERING COLUMN LOCK**

(30) Priority: 17.07.2015 EP 15177310
(71) Applicant: U-Shin Deutschland Zugangssysteme GmbH, 85253 Erdweg (DE)
(72) Inventor: KALIEBE, Lukas, 85253 Erdweg (DE); LAVAL, Anthony, 85253 Erdweg (DE); LEHMEIER, Norbert, 85253 Erdweg (DE); GRENOUILLAT, Régis, 85253 Erdweg (DE)
(74) Representative: Gaillarde, Frédéric F. Ch.

(57) **Abstract**

The invention relates to an electrical steering column lock for locking and unlocking a steering column, comprising:
-a motor (4) received in a housing and configured to drive in rotation around a motor rotation axis a motor shaft, the motor shaft comprising a driving part configured to drive a bolt (7) between a lock and an unlock position of the steering column,
-a washer (2) disposed at an end of the motor shaft so that the motor shaft rotates against said washer,
-an elastic element (3) disposed between the washer and the housing, the elastic element being in contact with the washer (2) and the housing.

The invention further relates to a corresponding vehicle.

## Description

The invention relates to an electrical steering column lock, as well as a vehicle comprising such an electrical steering column lock.

Electrical steering column lock generally comprises a motor configured to drive a bolt by means of a worm gear and a cam. The bolt is then driven along a load direction in order to be engaged in or to be disengaged from the steering column.

In the prior art electrical steering column lock, a washer may be disposed in the load direction of the motor so as to absorb the axial forces of the motor shaft. However, because of the axial integration of the motor, such washer is not sufficient for absorbing the high forces necessary to lock and to unlock the bolt.

Moreover, due to the design of the motor, there is a possibility of having a play between the motor and the casing of the steering column lock, and more precisely along the motor axis which is the rotation axis of the worm gear. In particular, this play causes a "clack" noise when the motor starts, and a noise when the motor is operating.

An object of the invention is to propose an electrical steering column which is reliable, efficient and present less noise than in the prior art.

To this end, the invention relates to an electrical steering column lock for locking and unlocking a steering column, comprising:
- a motor received in a housing and configured to drive in rotation around a motor rotation axis a motor shaft, the motor shaft comprising a driving part configured to drive a bolt between a lock and an unlock position of the steering column,
- a washer disposed at an end of the motor shaft so that the motor shaft rotates against said washer,
- an elastic element disposed between the washer and the housing, the elastic element being in contact with the washer and the housing.

Advantageously, the elastic element pushing against the washer enables to preload the motor axis such that the axial play is prevented.

According to further embodiments which can be considered alone or in combination:
- the washer is a washer disc; and/or
- the elastic element is disposed in order to press against the washer, so that the motor axis is preloaded according to the motor axis; and/or
- the elastic element is an elastic ball; and/or
- the elastic element is made in an elastomeric material; and/or the elastic element is associated with a return means; and/or
- the return means is a compression spring; and/or
- the elastic element is disposed in a cavity made in the housing; and/or
- the washer presents two flats faces in contact with the motor and the elastic element; and/or
- the washer is a flat disc made in steel.

According to another aspect, the invention relates to a vehicle comprising an electrical steering column lock according to the invention.

Other features and advantages of the present invention will become apparent from the following description of non-limitative embodiment, with reference to the attached drawings in which:

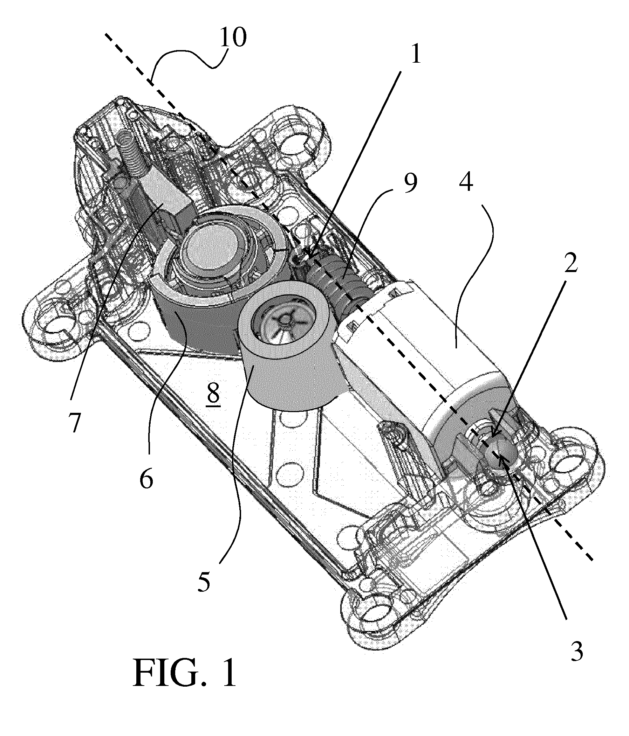

- figure 1 is a space view of an electrical steering column lock according to a preferred embodiment of the invention;

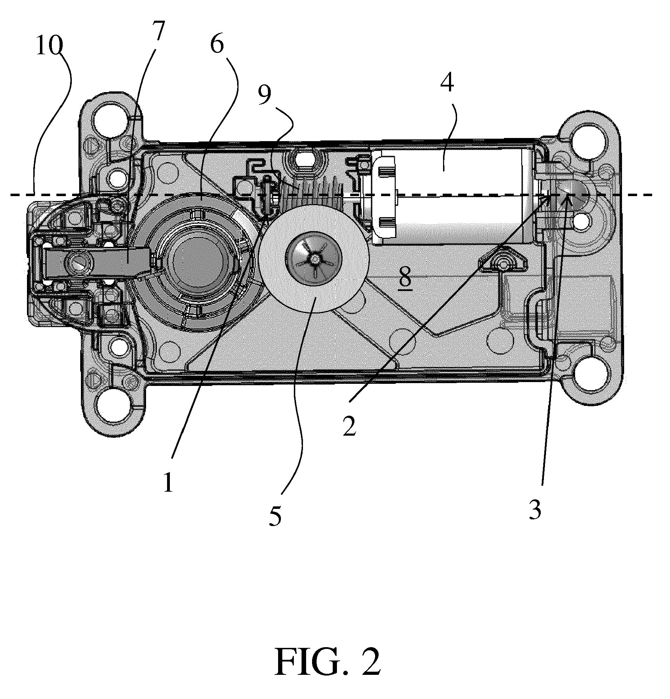

- figure 2 is a side view of the electrical steering column lock of figure 1; and

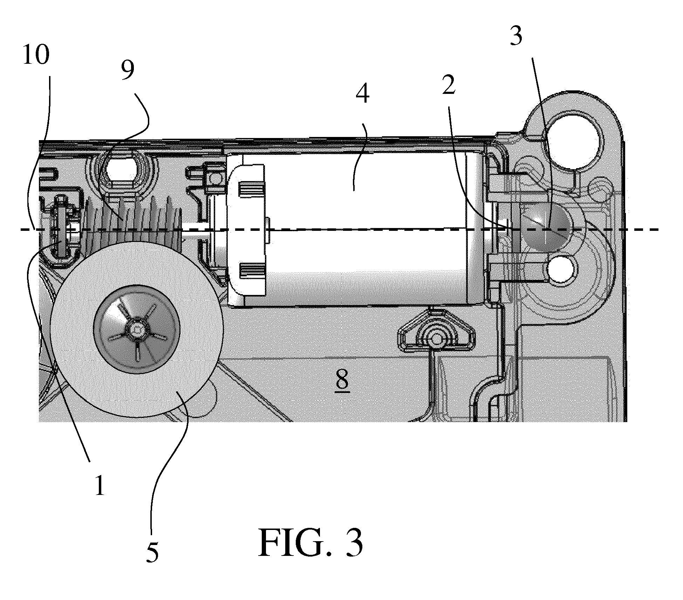

- figure 3 is a close view of the upper right part of figure 2.

Referring to the figures, the invention relates to an electrical column lock for locking and unlocking a steering column (not represented). The electrical steering column lock is housed in a housing 8.

The electrical steering column lock comprises a motor 4 received in the housing 8. The motor 4 is configured to drive a motor shaft in rotation around a motor rotation axis 10.

The motor shaft comprises a driving part 9 configured to drive a bolt 7 between a lock and an unlock position of the steering column. In the lock position, the bolt 7 engages the steering column. In the unlock position, the bolt 7 is disengaged from the steering column.

The driving part 9, which is preferably a worm, drives directly or indirectly the bolt 7 between the lock and unlock positions. According to an embodiment, the driving part drives two or more wheels 5, 6 driving the bolt 7 between the lock and unlock positions.

The electrical steering column lock of the invention further comprises a washer 2 disposed at an end of the motor shaft so that the motor shaft rotates against said washer.

The electrical steering column lock of the invention further comprises an elastic element 3 disposed between the washer 2 and the housing 8. The elastic element 3 is in contact with the washer 2 and the housing 8.

Advantageously, the elastic element 3 pushing against the washer 2 enables to preload the motor axis such that the axial play is prevented. Consequently, the steering column lock is less subject to wear in use, which improves its reliability and efficiency, the lifetime of the motor is improved, and the operating noise of the motor is reduced. Moreover, such configuration allows preventing the "clack" noise when the motor starts.

The motor shaft crosses through the motor 4.

In particular, the motor has a working face enabling to drive the bolt 7 and a fixing face enabling the fixation of the motor 4 in the housing 8. As shown in the figures, the centers of the working and fixing faces may be aligned with the motor rotation axis 10.

According to an embodiment, the washer 2 is disposed at a fixing face of the motor 4 such as being in contact with the said fixing face, and the elastic element 3 is put in contact with a face of the washer 2 opposite to the fixing face of the motor 4.

According to an embodiment, the electrical steering column lock further comprises a working washer 1 placed in the load direction on the side of the working face of the motor 4. Preferably, the working washer is placed such that the driving part 9 is placed between the working washer 1 and the working face of the motor 4. Advantageously, the washer 1 allows absorbing the axial forces of the motor shaft.

In a preferred embodiment of the invention, the electrical steering column lock comprises the working washer 1 placed at the working face of the motor 4 and the washer 2 placed at the fixing face of the motor 4.

In the preferred embodiment of the invention, one among the two ends of the motor and of the motor shaft is directed to the driving of the bolt 7 and the other is directed to the preload of the motor axis.

The arrangement of the preferred embodiment of the invention enables preventing axial play of the motor shaft. Such a steering column lock is less noisy with respect to the ones of the prior art.

According to an embodiment, the washer 2 is a washer disc. The washer could also have another shape, for instance the washer may have nonplanar ends, such as a conical washer. Preferably, the working washer 1 is a washer disc.

According to an embodiment, the elastic element 3 is disposed in order to press against the washer 2, so that the motor axis 10 is preloaded according to the motor axis.

According to an embodiment, the motor 4 extends along an axial direction and the load direction of the motor is the axial direction of the motor 4.

According to an embodiment, the elastic element 3 is an elastic ball. The elastic ball enables to have a uniform shape.

According to an embodiment, the elastic element 3 is made in an elastomeric material.

According to an embodiment, the elastic element 3 is associated with a return means.

According to an embodiment, the return means is a compression spring.

The elastic element 3 could also be a return means such as a spring, for instance a cylindrical spring, or an assembly of two or more parts, one of which is a return means such as a cylindrical spring.

According to an embodiment, the elastic element 3 is disposed in a cavity made in the housing 8. Such an arrangement enables to have a fixed position of the elastic element 3 in the housing 8.

According to an embodiment, the washer 2 presents two flats faces in contact with the motor 4 and the elastic element 3.

According to an embodiment, the washer is a flat disc made in steel.

The invention further relates to a vehicle comprising an electrical steering column lock as described above.

Such a vehicle is less noisy with respect to the ones of the prior art concerning the use of the steering column lock.

The invention has been described above with the aid of embodiments without limitation of the general inventive concept as defined in the claims.

Many modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. Electrical steering column lock for locking and unlocking a steering column, comprising:
- a motor (4) received in a housing and configured to drive in rotation around a motor rotation axis a motor shaft, the motor shaft comprising a driving part configured to drive a bolt (7) between a lock and an unlock position of the steering column,
- a washer (2) disposed at an end of the motor shaft so that the motor shaft rotates against said washer,
- an elastic element (3) disposed between the washer (2) and the housing (8), the elastic element (3) being in contact with the washer (2) and the housing (8).

2. Electrical steering column lock according to any of the preceding claims, wherein the washer (2) is a washer disc.

3. Electrical steering column lock according to any of the preceding claims, wherein the elastic element (3) is disposed in order to press against the washer (2), so that the motor axis is preloaded according to the motor axis.

4. Electrical steering column lock according to any of the preceding claims, wherein the elastic element (3) is an elastic ball.

5. Electrical steering column lock according to any of the preceding claims, wherein the elastic element (3) is made in an elastomeric material.

6. Electrical steering column lock according to any of the preceding claims, wherein the elastic element (3) is associated with a return means.

7. Electrical steering column lock according to the preceding claim, wherein the return means is a compression spring.

8. Electrical steering column lock according to any of the preceding claims, wherein the elastic element (3) is disposed in a cavity made in the housing (8).

9. Electrical steering column lock according to any of the preceding claims, wherein the washer (2) presents two flats faces in contact with the motor (4) and the elastic element (3).

10. Electrical steering column lock according to any of the preceding claims, wherein the washer is a flat disc made in steel.

11. Vehicle comprising an electrical steering column lock according to any of the preceding claims.
